# EUROPEAN PATENT APPLICATION

(11) **EP 1 312 625 A1**
(43) Date of publication of application: **21.05.2003**
(21) Application number: 01430035.4
(22) Date of filing: 20.11.2001
(51) Int. Cl.: C08F 210/16, C08F 2/34

(54) **Gas phase polymerization process**

(71) Applicant: BP Chemicals SNC, 95866 Cergy Pontoise Cedex (FR)
(72) Inventor: The designation of the inventor has not yet been filed
(74) Representative: De Kezel, Eric

(57) **Abstract**

Copolymers of ethylene and alpha-olefins containing from three to twenty carbon atoms having an activation energy of greater than or equal to 40 kJ/mol and a Mw/Mn of less than 8 are prepared in the gas phase using a catalyst system comprising a monocyclopentadienyl complex.

The catalyst system preferably comprises a combination of an organoborane and aluminoxane as activator.

## Description

The present invention relates to a process for polymerizing olefins and in particular to a process for the polymerization of olefins in the gas phase to prepare polymers having a broad molecular weight distribution, toughness and improved processability.

In recent years there have been many advances in the production of polyolefin copolymers due to the introduction of metallocene catalysts. Metallocene catalysts offer the advantage of generally higher activity than traditional Ziegler catalysts and are usually described as catalysts which are single-site in nature. Because of their single-site nature the polyolefin copolymers produced by metallocene catalysts often are quite uniform in their molecular structure. For example, in comparison to traditional Ziegler produced materials, they have relatively narrow molecular weight distributions (MWD) and narrow Short Chain Branching Distribution (SCBD). Although certain properties of metallocene products are enhanced by narrow MWD, difficulties are often encountered in the processing of these materials into useful articles and films relative to Ziegler produced materials. In addition, the uniform nature of the SCBD of metallocene produced materials does not readily permit certain structures to be obtained.

An approach to improving processability has been the inclusion of long chain branching (LCB), which is particularly desirable from the viewpoint of improving processability without damaging advantageous properties. US Patent No.s 5,272,236; 5,278,272; 5,380,810; and EP 659,773, EP 676,421, relate to the production of polyolefins with long chain branching.

Another approach is the addition of the polymer processing aids to the polymer prior to fabrication into films or articles. This requires extra processing and is expensive.

A different approach to the problem has been to make compositions which are blends or mixtures of individual polymeric materials with the aim being to maximise the beneficial properties of given component while minimising its processing problems. This also requires extra processing which increases the cost of materials produced. US Patent No.'s 4,598,128; 4,547,551; 5,408,004; 5,382,630; 5,383,631; and 5,326,602; and WO 94/22948 and WO 95/25141 relate to typical blends.

Another way to provide a solution for the processability problems and to vary SCBD has been the development of various cascade processes, where the material is produced by a series of polymerizations under different reactor conditions, such as in a series of reactors. Essentially, a material similar in some ways to a blend is produced, with a modality greater than one for various physical properties, such as the molecular weight distribution. While polyolefin compositions with superior processability characteristics can be produced this way, these methods are expensive and complicated relative to the use of a single reactor. Processes of interest are disclosed in US Patent No. 5,442,018, WO 95/26990, WO 95/07942 and WO 95/10548.

Another potentially feasible approach to improving processability and varying SCBD has been to use a multicomponent catalyst. In some cases, a catalyst which has a metallocene catalyst and a conventional Ziegler-Natta catalyst on the same support are used to produce a multimodal material. In other cases two metallocene catalysts have been used in polyolefin polymerizations. Components of different molecular weights and compositions are produced in a single reactor operating under a single set of polymerisation conditions. This approach is difficult from the point of view of process control and catalyst preparation. Catalyst systems of interest are disclosed in WO 95/11264 and EP 676,418.

US 5462999 and US 5405922 teaches the preparation of ethylene copolymers in the gas-phase using a silica supported metallocene catalyst. It is believed, however, that the products produced by following the examples will not contain long chain branching.

EP 676421 also teaches the preparation of copolymers having long chain branching in the gas phase using a supported metallocene catalyst based on bis(cyclopentadienyl) metallocene complexes.

EP 452920 and EP495099 teach the production of ethylene copolymers also using bis(cyclopentadienyl) metallocene catalysts. Once again it is believed that the examples contained therein will not produce products with some or all of the desirable characteristics mentioned below

Our earlier application WO 99/35174 describes copolymers having improved processability and which exhibit specific melt strength characteristics. Such copolymers are advantageously prepared using a single metallocene catalyst system using a single gas-phase, fluidised bed reactor. The copolymers are preferably prepared by use of bis(cyclopentadienyl) diene complexes as part of the metallocene catalyst system.

It would be advantageous to prepare such copolymers by use of other metallocene catalyst systems in order to be able to have a choice of methods of preparation giving the potential for economic savings.

US 6025448 describes the preparation of copolymers in the gas phase using monocyclopentadienyl complexes. The copolymers obtained however exhibit properties different from those described in the aforementioned WO 99/35174.

We have now surprisingly found that copolymers as described in the WO 993517 and which have the processability and impact strength similar to highly branched low density polyethylene (LDPE) may now be prepared in the gas phase using a single metallocene catalyst system comprising a monocyclopentadienyl complex. The complex is preferably supported and used in a polymerisation process using a single fluidised bed reactor, operating semi-continuously or, preferably, continuously under a single set of reactor conditions.

Thus according to the present invention there is provided a process for the preparation of copolymers of ethylene and one or more alpha olefins containing from three to twenty carbon atoms said copolymer having:-
(a) an activation energy, Ea, of value greater than or equal to 40 kJ/mol,
(b) a Mw/Mn value of less than 8,
characterised in that said process is carried out in the gas phase in the presence of a metallocene catalyst system comprising a monocyclopentadienyl complex.

Preferred metallocene complexes for use in the preparation of the copolymers of the present invention may be represented by the general formula: 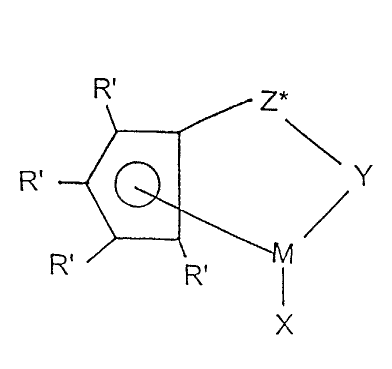 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral →⁴ bonded diene group having up to 30 non-hydrogen atoms, which forms a π complex with M;
Y is -O-, -S-, -NR*-, -PR*-,
M is titanium or zirconium in the + 2 formal oxidation state;
Z* is SiR*₂, CR*₂, SiR*₂SIR*₂, CR*₂CR*₂, CR*=CR*, CR*₂SIR*₂, or
GeR*₂, wherein:
   R* each occurrence is independently hydrogen, or a member selected from hydrocarbyl, silyl, halogenated alkyl, halogenated aryl, and combinations thereof, said R* having up to 10 non-hydrogen atoms, and optionally, two R* groups from Z* (when R* is not hydrogen), or an R* group from Z* and an R* group from Y form a ring system.

Examples of suitable X groups include s-trans-⁴-1,4-diphenyl-1,3-butadiene, s-trans-→⁴-3-methyl-1,3-pentadiene; s-trans-→⁴-2,4-hexadiene; s-trans-→⁴-1,3-pentadiene; s-trans-→⁴-1,4-ditolyl-1,3-butadiene; s-trans-→⁴-1,4-bis(trimethylsilyl)-1,3-butadiene; s-cis-→⁴-3-methyl-1,3-pentadiene; s-cis-→⁴-1,4-dibenzyl-1,3-butadiene; s-cis-→⁴-1,3-pentadiene; s-cis-→⁴-1,4-bis(trimethylsilyl)-1,3-butadiene, said s-cis diene group forming a π-complex as defined herein with the metal.

Most preferably R' is hydrogen, methyl, ethyl, propyl, butyl, pentyl, hexyl, benzyl, or phenyl or 2 R' groups (except hydrogen) are linked together, the entire C₅R'₄ group thereby being, for example, an indenyl, tetrahydroindenyl, fluorenyl, terahydrofluorenyl, or octahydrofluorenyl group.

Highly preferred Y groups are nitrogen or phosphorus containing groups containing a group corresponding to the formula -N(R")- or -P(R3)- wherein R" is C₁₋₁₀ hydrocarbyl.

Most preferred complexes are amidosilane - or amidoalkanediyl complexes.

Most preferred complexes are those wherein M is titanium.

Specific complexes suitable for use in the preparation of the copolymers of the present invention are those disclosed in WO 95/00526, the relevant parts of which are incorporated herein by reference.

A particularly preferred complex for use in the preparation of the copolymers of the present invention is (t-butylamido) (tetramethyl-→⁵ - cyclopentadienyl) dimethyl silanetitanium -→⁴ -1,3-pentadiene.

The monocyclopentadienyl complexes of the present invention are used in the presence of a suitable activator or cocatalyst. Preferred activators for use in the process of the present invention are organometallic compounds.

The preferred activator is a combination of two organometallic compounds. For example a combination of an organoboron compound and an organoaluminium compound may be suitable for use in the process of the present invention. The combination of a triarylborane and an aluminoxane is particularly suitable for use in the process of the present invention.

The preferred activator is the combination of tris(pentafluorophenyl) borane (FAB) and methyl aluminoxane (MAO).

The monocyclopentadienyl complexes suitable for use in the present invention are most suitably supported. Typically the support can be any organic or inorganic inert solid. However particularly porous supports such as talc, inorganic oxides and resinous support materials such as polyolefins which have well-known advantages in catalysis are preferred.. Suitable inorganic oxide materials which may be used include Group 2, 13, 14 or 15 metal oxides such as silica, alumina, silica-alumina and mixtures thereof. Other inorganic oxides that may be employed either alone or in combination with the silica, alumina or silica-alumina are magnesia, titania or zirconia. Other suitable support materials may be employed such as finely divided polyolefins such as polyethylene.

The most preferred support material for use with the supported catalysts according to the process of the present invention is silica. Suitable silicas include Crossfield ES70 and Davidson 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure, for example, for 5 hrs.

The support material may be pretreated with an aluminium alkyl, for example triethylaluminium, at a temperature of -20°C to 150°C and preferably at 20°C to 100°C.

The pretreated support is preferably recovered before use in the preparation of the supported catalysts of the present invention.

Thus according to another aspect of the present invention there is provided a process for the preparation of copolymers of ethylene and one or more alpha olefins containing from three to twenty carbon atoms said copolymer having:-
(c) an activation energy, Ea, of value greater than or equal to 40 kJ/mol,
(d) a Mw/Mn value of less than 8,
characterised in that said process is carried out in the gas phase in the presence of a supported metallocene catalyst system comprising
(a) a support material,
(b) a monocyclopentadienyl complex, and
(c) an activator comprising an organoboron compound and an aluminoxane

The preferred activator comprises tris(pentafluorophenyl) borane (FAB) and methyl aluminoxane (MAO).

The preferred monocyclopentadienyl complex is (t-butylamido) (tetramethyl-→⁵- cyclopentadienyl) dimethyl silanetitanium -→⁴ -1,3-pentadiene.

The preferred supported metallocene catalyst system for use in the process of the present invention is preferably prepared by
(a) mixing an organoboron compound with an aluminoxane in a suitable solvent,
(b) addition to the mixture from step (a) of a monocyclopentadienyl complex in a suitable solvent,
(c) addition of the resultant mixture from step (b) to a support material in a suitable solvent, and
(d) removal of the solvent.

The copolymers of the present invention are suitably prepared by continuous polymerisation of the required monomer(s) in the presence of a single metallocene catalyst system in a single reactor. By the term continuous polymerisation is meant a process which for at least a significant period of time is operated with continuous feeding of the monomer(s) to the reactor in parallel with continuous or periodic withdrawing of copolymer product. Preferably the continuous polymerisation is effected in the gas phase at elevated temperature in the presence of a fluidised bed of polymer particles and continuous recycle of unreacted monomer(s) around a loop joining the inlet and outlet of the reactor containing the fluidised bed. Examples of two possible approaches are described in EP 89961, US 53527947 and US 5541270 the complete texts of which are herein incorporated by reference. EP 699213 also illustrates a possible approach and again the complete text of this publication is incorporated by reference.

The copolymers of the present invention are copolymers of ethylene with one or more alpha-olefins having from three to twenty carbon atoms. Preferably the alphaolefin has between three and ten carbon atoms most preferably three and eight. Examples of the most preferred alpha olefins include 1-butene, 1-hexene, 4-methyl-1-pentene, 1-octene. Particular suitable are copolymers of ethylene with 1-hexene or 4-methyl-1-pentene.

The copolymers prepared according to the process of the present invention have an activation energy, Ea, of value greater than or equal to 40 kJ/mol, and most preferably greater than or equal to 55 kJ/mol., and even more preferably greater than or equal to 60 kJ/mol.

The copolymers have a molecular weight distribution (Mw/Mn) value of less than 8 and most preferably less than 6.

The preferred molecular weight distribution (Mw/Mn) is in the range 3.0 to 6.0.

The copolymers prepared by the process of the present invention are described in detail in the aforementioned WO 99/35174 and in addition to the parameters of activation energy (Ea) and molecular weight distribution (Mw/Mn) may be described by means of long chain branching (g'), melt strength, extrusion pressure and shear rate. Full details of these parameters are incorporated herein from WO 99/35174.

For example the copolymers prepared by use of the process of the present invention comprise copolymers of ethylene and one or more alpha olefins containing from three to twenty carbon atoms having:-
a) a long chain branching g' value of less than or equal to 0.9 and
b) a value of the derivative function δ(MS)/δ(P) of greater than 0.6
wherein MS is the melt strength of the copolymer in cN and P is the extrusion pressure of the copolymer in MPa.

The process of the present invention will now be illustrated by reference to the following examples:

### Example 1

### Preparation of support material

To 5.367 g of silica Grace 948 (previously calcined at 250°C for 5 hours) in (hexane) was added a solution of triethylaluminium (TEA) in hexane (1.06 mol/l, 10 ml, 10.6 mmol). The mixture was allowed to react for 30 minutes then the liquid fraction was filtered and the remaining solid was washed with 3 x 20 ml of hexane and finally dried under vacuum.
[Al]=1.45 mmol/g of support (measured by ICP).

### Preparation of metallocene/activator

To 30 ml of toluene were added 6.367 g of a 6.12wt% toluene solution of tris (pentafluorophenyl) boron (FAB) (0.761 mmol) and 3.148g of a 10wt% toluene solution of methyl aluminoxane (MAO) (5.43 mmol). To 15 ml. of the resultant mixture was added 0.494g of a 9.17 wt% heptane solution of (t-butylamido) (tetramethyl-→⁵-cyclopentadienyl) dimethyl silanetitanium -→⁴-1,3-pentadiene (0.695 ml, 0.12 mmol) and the reaction mixture stirred for 2 hrs. at room temperature.

### Preparation of supported catalyst

To a suspension of the support material (1.975 g) in toluene (10 ml) was added the metallocene/activator mixture. The resultant mixture was allowed to react for 1 hour at room temperature, then dried under vacuum. A green-beige free flowing powder was obtained.
[Ti] = 0.046 mmol/g catalyst; [Al] = 1.73 mmol/g catalyst

### Example 2

### Polymerization

| | |
|---|---|
| The supported catalyst prepared in example 1 was used for the copolymerization of ethylene and 1-hexene in the gas phase under the following conditions: | |
| Ethylene | 7 bar |
| Hydrogen | 40 ml |
| 1-hexene | 5000 ppm |
| Catalyst injected | 0.5mg |
| Polymerisation time | 1 hour |

### Product characteristics

| | |
|---|---|
| Activity | 21 g/g.h.bar |
| MI (2.16 kg) | 0.194 g/10 min |
| density | 0.918 g/ml |
| Ea | 60.5 kJ/mol |
| Mn | 43600 |
| Mw | 150400 |
| MWD | 3.4 |

### Melt Flow Rate (2.16 kg)

The melt flow rate (MFR) of the polymers was measured under conditions which conform to ISO 1133 (1991) and BS 2782:PART 720A:1979 procedures. The weight of polymer extruded through a die of 2.095 mm diameter, at a temperature of 190°C, during a 600 second time period and under a standard load of 2.16 kg is recorded.

### Molecular Structure Characterisation

Various techniques (eg ¹³C NMR, GPC/LALLS, GPC/intrinsic viscosity, GPC/on-line viscometry and rheological flow activation energy, etc) have been developed to indicate the presence of long chain branching in polymers.

### Molecular Weight Distribution (M_{w}/Mₙ)

Molecular weight distribution and associated averages, were determined by Gel Permeation Chromatography using a Waters GPCV 2000. The Millennium version 3.05.01 software supplied by Waters was used for data treatment. The solvent used was 1,2,4 Trichlorobenzene at 150°C, stabilised with 0.05% BHT. The nominal flow rate was 1 ml/min. Solutions of concentration around 0.1%w/w were prepared at 150°C for 2 hours on a hot plate, and the nominal injection volume was set at 217.5 ml. 2 Shodex AT806M/S and 1 Waters HT2 columns were used with a plate count (at half height) of typically 28,000. The system was calibrated using 12 polystyrene standards supplied by Polymer Laboratories.

Apparent molecular weight distribution and associated averages, uncorrected for long chain branching, were determined using the differential refractometer detector alone. Molecular weight of Ps standards were converted to polyethylene molecular weights using the Mark Houwink parameters Kₚₛ = 1.75 x10⁻⁴ dl/g, □ₚₛ= 0.67, Kₚₑ = 4.1 x 10⁻⁴ dl/g, □ₚₑ = 0.706 [Polymer Handbook, J. Bandrup and E.H. Immergut, 3^{rd} Edition].

This calibration has been checked against the NIST certified polyethylene SRM1475, the values obtained being 54,100 g/mol for M_{w} and 17,300 g/mol for Mₙ.

### Flow Activation Energy (Ea) Measurement

Rheological measurements were carried out on a Rheometrics RDS-2 with 25 mm diameter parallel plates in the dynamic mode. Two strain sweep (SS) experiments were initially carried out to determine the linear viscoelastic strain that would generate a torque signal which is greater than 10% of the full scale (2000 g-cm) of the transducer over the full frequency (eg 0.01 to 100 rad/s) and temperature (eg 170° to 210°C) ranges. The first SS experiment was carried out at the highest test temperature (eg 210°C) with a low applied frequency of 0.1 rad/s. This test is used to determine the sensitivity of the torque at low frequency. The second experiment was carried out at the lowest test temperature (eg 170°C) with a high applied frequency of 100 rad/s. This is to ensure that the selected applied strain is well within the linear viscoselastic region of the polymer so that the oscillatory rheological measurements do not induce structural changes to the polymer during testing. This procedure was carried out for all the samples.

The bulk dynamic rheological properties (eg G', G" and η*) of all the polymers were then measured at 170°, 190° and 210°C. At each temperature, scans were performed as a function of angular shear frequency (from 100 to 0.01 rad/s) at a constant shear strain appropriately determined by the above procedure.

The dynamic rheological data was then analysed using the Rheometrics RHIOS V4.4 Software. The following conditions were selected for the time-temperature (t-T) superposition and the determination of the flow activation energies (**E**ₐ) according to an Arrhenius equation, **a**_{T} = exp (**E**ₐ/kT), which relates the shift factor (**a**_{T}) to **E**ₐ:

| | |
|---|---|
| Rheological Parameters | G'(ω), G"(ω) & η*(ω) |
| Reference Temperature | 190°C |
| Shift Mode | 2D (ie horizontal & vertical shifts) |
| Shift Accuracy | High |
| Interpolation Mode | Spline |

## Claims

1. A process to the preparation of copolymers of ethylene and one or more alpha olefins containing from three to twenty carbon atoms said copolymer having:-
(a) an activation energy, Ea, of value greater than or equal to 40 kJ/mol,
(b) a Mw/Mn value of less than 8,
**characterized in that** said process is carried out in the gas phase in the presence of a metallocene catalyst system comprising a monocyclopentadienyl complex.

2. A process according to claim 1 wherein the monocyclopentadienyl complex has the general formula:- 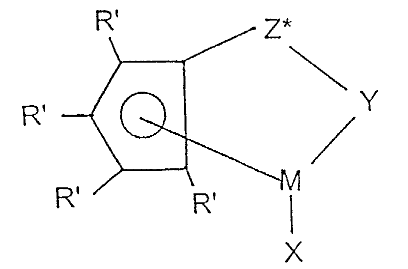 wherein:-
R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral →⁴ bonded diene group having up to 30 non-hydrogen atoms, which forms a π complex with M;
Y is -O-, -S-, -NR*-, -PR*-,
M is titanium or zirconium in the + 2 formal oxidation state;
Z* is SiR*₂, CR*₂, SiR*₂SIR*₂, CR*₂CR*₂, CR*=CR*, CR*₂SIR*₂, or GeR*₂, wherein:
R* each occurrence is independently hydrogen, or a member selected from hydrocarbyl, silyl, halogenated alkyl, halogenated aryl, and combinations thereof, said R* having up to 10 non-hydrogen atoms, and optionally, two R* groups from Z* (when R* is not hydrogen), or an R* group from Z* and an R* group from Y form a ring system.

3. A process according to either of the preceding claims wherein the catalyst system further comprises an activator comprising an organoboron compound and an aluminoxane.
